# EUROPÄISCHE PATENTANMELDUNG

(11) **EP 1 498 651 A2**
(43) Veröffentlichungstag der Anmeldung: **19.01.2005**
(21) Anmeldenummer: 04017030.0
(22) Anmeldetag: 19.07.2004
(51) Int. Cl.: F16L 3/13, F16B 5/06

(54) **Befestigungselement**

(30) Priorität: 17.07.2003 DE 20310993 U; 12.09.2003 DE 20314186 U; 07.11.2003 DE 10352084
(71) Anmelder: Brandes, Peter, 31241 Ilsede (DE)
(72) Erfinder: Brandes, Peter, 31241 Ilsede (DE)
(74) Vertreter: Gerstein, Hans Joachim

(57) **Zusammenfassung**

Ein Befestigungselement (1) zum Festlegen von Leitungen (6) in Mauernuten (7) hat einen federelastischen vorgekrümmten Hauptschenkelabschnitt (2) mit zwei gegenüberliegenden Enden (3a, 3b) und jeweils an den Enden (3a, 3b) von dem Hauptschenkelabschnitt (2) hervorragenden Nasen (4a, 4b) im Bereich der Enden (3a, 3b), wobei die Nasen (4a, 4b) im gebogenen eine Leitungsaufnahmeschelle bildenden Einbauzustand Befestigungselementes (1) gesehen voneinander wegweisen und das Befestigungselement (1) im Querschnitt ein Ω-Profil bildet.

## Beschreibung

Die Erfindung betrifft ein Befestigungselement zum Festlegen von Leitungen in Mauernuten mit einem federelastischen vorgekrümmten Hauptschenkelabschnitt mit zwei gegenüberliegenden Enden und jeweils an den Enden quer von dem Hauptschenkelabschnitt hervorragenden Nasen im Bereich der Enden.

Bei der Unterputz-Verlegung von Leitungen, insbesondere von Elektroleitungen aber auch von Wasserleitungen etc. ist bekannt, Mauernuten mit einer Mauernutfräse in die Wand zu fräsen, die Leitung in die Mauernut einzulegen und mit Gips oder Mörtel zu fixieren. Um vor allem bei größeren Strecken eine sichere Fixierung zu ermöglichen muss die Leitung unter Umständen fixiert werden. Hierzu sind Nagelschellen mit einem Nagel und einer Kunststoffabdeckplatte am Nagelkopf bekannt, die in das Mauerwerk eingeschlagen werden und mittels der Kunststoffabdeckplatte die Leitung halten. Das Anschlagen der Nägel ist allerdings zeitaufwendig und bei hartem Mauerwerk oftmals unmöglich.

Weiterhin sind Mauernutplatten aus Kunststoff bekannt, in die ein Nagel mit einer passend zum Mauerwerk bzw. Untergrund gewählten Nagellänge eingesteckt werden kann. Auch hier ist die Nagelbefestigung zeitaufwendig. Zudem muss um die Mauernutplatte herum der Putz abgeklopft werden, damit diese richtig verschwindet und beim Verputzen der Nagelkopf nicht heraussteht.

Auch für die Verlegung von Rohrleitungen sind Schellen bekannt, die mittels Nagel oder Schraube in der Wand befestigt werden.

In der DE 295 03 619 U1, DE 296 00 810 U1 und DE 200 12 851 U1 ist eine Kabelklemmschelle zur Befestigung von Kabeln und Rohren in einem Schlitz im Mauerwerk mit einem die Leitung abdeckenden klemmend in den Schlitz eingebrachten Abschnitt und zwei von dem geraden Hauptanschnitt senkrecht abgehenden Schenkel offenbart, die eine Riffelung an den Außenseite durch die Federkraft der seitlichen Schenkel wird die Kabelklemmschelle in dem Schlitz gehalten.

Weiterhin ist aus der DE 198 55 184 C1 ein Kabel- und Rohrklemmblock offenbart, der in eine Mauernut zum Festlegen einer Leitung getrieben wird.

In der DE 200 05 781 U1 ist eine Fixierklemme für eine Installationsschlauchbefestigung in einem Mauerschlitz eines Unterputzes beschrieben, die in ihrer Gesamtheit elastisch biegbar ist und unabhängig voneinander biegbare und justierbare Halteraufsätze zur Verhakung in den Mauerschlitz hat.

Aus der DE 298 03 142 U1 ist eine Fixiervorrichtung für Leitungen in Wandschlitzen bekannt, die als eine im Wesentlichen C-förmige Klemme ausgebildet ist, die auf eine Leitung aufsteckbar ist. Im Bereich der beiden Schenkel sind jeweils nach außen gerichtete Flügel vorgesehen, die für die Klemmkraft verantwortlich sind, welche die Klemme innerhalb des Schlitzes ausübt. Daher sollen die Flügel entsprechend groß dimensioniert werden, um im geklemmten Zustand den notwendigen Gegendruck auf die Wand zu erzeugen. Die Flügel sind bezüglich der Klemmenöffnung nach hinten gerichtet.

Aufgabe der Erfindung ist es daher, ein verbessertes Befestigungselement zum Festlegen von Leitungen in Mauernuten zu schaffen, das einen sicheren Halt bietet, schnell und einfach zu montieren ist und zudem preiswert in der Herstellung ist.

Die Aufgabe wird mit dem gattungsgemäßen Befestigungselement erfindungsgemäß dadurch gelöst, dass der Hauptschenkelabschnitt und die Nasen versteift integral miteinander so geformt sind, dass die Nasen im gebogenen eine Leitungsaufnahmeschelle bildenden Einbauzustand des Befestigungselementes gesehen voneinander wegweisen und das Befestigungselement im Querschnitt ein Ω-Profil bildet.

Ein solches Befestigungselement hat den Vorteil, dass mindestens eine Leitung durch die Leitungsaufnahmeschelle mit geringem Kraftaufwand ohne Nägel festsitzend in einer Mauernut gehalten werden kann. Hierzu wird die mindestens eine Leitung in die Leitungsaufnahmeschelle durch eine Aufnahmeöffnung im Bereich der Enden des Hauptschenkelabschnitts eingelegt und das Befestigungselement anschließend in die Mauernut gedrückt. Durch die Federwirkung des. Hauptschenkelabschnitts und der Nasen wird das Befestigungselement in der Mauernut verkeilt. Aufgrund der Ω-Form wird bei einer Kraftwirkung der Leitung auf die Enden des Hauptschenkelabschnitts ein weiterer Druck auf die Nasen ausgeübt, so dass sich das Befestigungselement weiter in der Mauernut verkeilt. Damit wird der Halt extrem verstärkt und einem Lösen des Befestigungselementes entgegengewirkt. Verdrilltes, steifes oder kaltes Leitungsmaterial lässt sich vor allem im Winter leicht mit dem Befestigungselement befestigen, da ein derartiges Leitungsmaterial die Bestrebung hat, gegen die Schenkel der Leitungsaufnahmeschelle zu drücken und damit den Verankerungsdruck automatisch zu erhöhen. Dies wird erfindungsgemäß dadurch erreicht, dass der Hauptschenkelabschnitt vorgekrümmt ist und mit den Nasen im Querschnitt eine Ω-Form bildet.

Es ist vorteilhaft, wenn die Nasen an den Enden keilförmig zulaufend sind, vorzugsweise mit einem Winkel von 45°.

Dabei sollten die Nasen im gebogenen Einbauzustand vom zentralen Abschnitt in Richtung der Enden des Hauptschenkelabschnitts gesehen keilförmig zulaufend sein. Das heißt, dass die Nasen mit ca. 45° scharfkantig entgegen der Herausgleitrichtung angefassten Enden versehen sein sollten. Dies hat den Vorteil, dass das Einführen der Befestigungselemente in die Mauernuten auf Grund der Fase erleichtert und das Verhaken der Nasen in die Flanken der Mauernut verstärkt wird.

In einer anderen Ausführungsform, bei der das Befestigungselement vorzugsweise mit den Nasen zuerst in die Mauernut eingedrückt wird, sind die Nasen vorzugsweise mit gebogenem Einbauzustand von den Enden in Richtung des zentralen Abschnitts des Hauptschenkelabschnitts gesehen keilförmig zulaufend.

Der Hauptschenkelabschnitt hat vorzugsweise einen rechteckförmigen Querschnitt.

Dabei sollte das Befestigungselement vorzugsweise aus Kunststoff, insbesondere aus Polypropylen gebildet sein. Damit eine optimale Steifheit und Federwirkung in Verbindung mit einer preiswerten Spritzgussfertigung sichergestellt.

Die Nasen gehen vorzugsweise spitzwinklig in den Hauptschenkelabschnitt über, so dass kein Materialüberschuss in dem spitzen Winkel verbleibt und damit eine hinreichende Elastizität des Befestigungselementes sichergestellt wird.

Für die Montage mehrerer Leitungen in das Befestigungselement unabhängig voneinander kann mindestens ein Abstandshaltesteg vorgesehen sein, der im Bereich des zentralen Abschnitts des Hauptschenkelabschnitts in die im gekrümmten Zustand gebildete Leitungsaufnahmeschelle hineinragt.

Die Erfindung wird nachfolgend an Hand der beigefügten Zeichnungen beispielhaft näher erläutert. Es zeigen:
- Fig. 1 -: Querschnittsansicht des erfindungsgemäßen Befestigungselementes mit Hauptschenkelabschnitt und Nasen;
- Fig. 2 -: Querschnittsansicht des im Einbauzustand in eine Mauernut eingeklemmten Befestigungselementes gemäß Fig.1 mit aufgenommener Leitung;
- Fig. 3 -: perspektivische Ansicht des Befestigungselementes aus Fig.3.

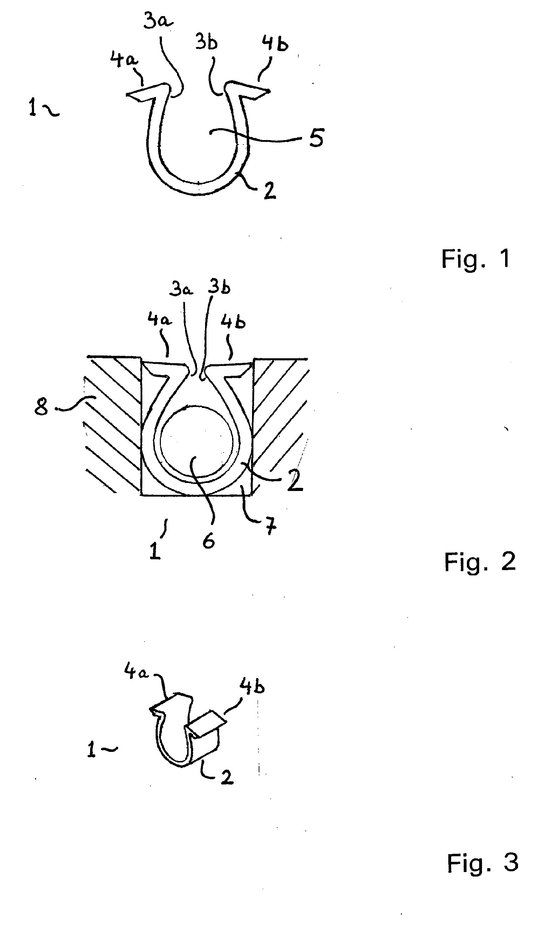

Die Fig.1 lässt ein erfindungsgemäßes Befestigungselement zum Festlegen von Leitungen, insbesondere von Unterputz verlegten Elektromantelleitungen erkennen. Das Befestigungselement 1 weist einen federelastischen Hauptschenkelabschnitt 2 auf, von dem an den beiden gegenüberliegenden Enden 3a, 3b des Hauptschenkelabschnitts 2 jeweils Nasen 4a, 4b von dem Hauptschenkelabschnitt hervorragen. Es ist erkennbar, dass die Nasen 4a, 4b in gebogenen eine Leitungsaufnahmeschelle 5 bildenden Einbauzustand des Befestigungselementes 1 voneinander wegweisen.

Weiterhin ist erkennbar, dass die Nasen 4a, 4b an den Enden keilförmig zulaufend sind. In den dargestellten Ausführungsbeispiel beträgt der Keilwinkel etwa 45° und läuft im den dargestellten gebogenen Einbauzustand von zentralen Abschnitt des Hauptschenkelabschnitts 2 in Richtung der Enden 3a, 3b des Hauptschenkelabschnitts 2 gesehen keilförmig zu. Das heißt, das die Keilspitze jeweils am äußersten Ende des Befestigungselementes 1 ist und die Flanken sich in Richtung des zentralen Abschnitts des Hauptschenkelabschnitts 2 verjüngen.

Auf diese Weise kann, wie in der Fig. 2 dargestellt ist, nach Einlegen einer Leitung 6 in die Leitungsaufnahmeschelle 5 der Hauptschenkelabschnitt 2 in eine Mauernut 7 eingedrückt werden, die in eine Mauerwand 8 gefräst ist. Durch die keilförmig zulaufenden Nasen 4a, 4b gleitet das Befestigungselement 1 sodann weiter in die Mauernut 7 hinein und drückt die Enden 3a, 3b des Hauptschenkelabschnitts 2 immer weiter zusammen, bis das Befestigungselement 1 durch die Nasen 4a, 4b in der Mauernut 7 fest verkrallt ist.

Wenn nun die Leitung 6 nach außen aus der Mauernut 7 heraus gezogen wird, wird ein weiterer Druck auf die Enden 3a, 3b des Hauptschenkelabschnitts 2 ausgeübt, was zu einer Verstärkung der Federklemmkraft führt, so dass das Befestigungselement 1 sich noch weiter in der Mauernut 7 verkrallt.

Optional kann in einem nicht dargestellten Ausführungsbeispiel das Befestigungselement 1 mit den Nasen 4a, 4b zuerst in die Mauernut 7 eingebracht werden. Dann sollten die Nasen 4a, 4b an den Enden andersherum keilförmig zulaufend sein, das heißt in gebogenen Einbauzustand von den Enden 3a, 3b des Hauptschenkelabschnitts 2 in Richtung des zentralen Abschnitts des Hauptschenkelabschnitts 2 gesehen keilförmig zulaufend sein. Dies hat allerdings den Nachteil, dass die Klemmkraft nicht wie im den dargestellten Ausführungsbeispiel bei Zugkraft der Leitung auf das Befestigungselement 1 erhöht wird.

Die Nasen 4a, 4b sollten wie dargestellt in einem spitzen Winkel in den Hauptschenkelabschnitt 2 übergehen, so dass eine ausreichende Elastizität des Befestigungselementes 1 sichergestellt wird.

Dabei ist es vorteilhaft, wenn das Befestigungselement per Spritzguss mit Hauptschenkelabschnitt 2 und Nasen 4a, 4b integral aus Kunststoff, insbesondere aus Polypropylen (PP) hergestellt wird.

Die Größe der Mauernuten 7 sollte optimal an die Größe des Befestigungselementes 1 angepasst werden. So ist es vorteilhaft, wenn die Breite der Mauernut 7 nicht mehr als 13 mm und die Tiefe mindestens 20 mm beträgt, so dass ein möglichst hoher Verankerungsdruck erzielt wird und das Befestigungselement 1 in der Mauernut 7 voll versenkt wird.

## Patentansprüche

1. Befestigungselement (1) zum Festlegen von Leitungen (6) in Mauernuten (7) mit einem federelastischen vorgekrümmten Hauptschenkelabschnitt (2) mit zwei gegenüberliegenden Enden (3a, 3b) und jeweils an den Enden (3a, 3b) quer von dem Hauptschenkelabschnitt (2) hervorragenden Nasen (4a, 4b) im Bereich der Enden (3a, 3b), **dadurch gekennzeichnet, dass** der Hauptschenkelabschnitt (2) und die Nasen (4a, 4b) versteift integral miteinander so geformt sind, dass die Nasen (4a, 4b) im gebogenen eine Leitungsaufnahmeschelle (5) bildenden Einbauzustand des Befestigungselementes (1) gesehen voneinander wegweisen und das Befestigungselement (1) im Querschnitt ein Ω-Profil bildet.

2. Befestigungselement (1) nach einem der vorhergehenden Ansprüche, **dadurch gekennzeichnet, dass** die Nasen (4a, 4b) an den Enden (3a, 3b) keilförmig zulaufend sind, vorzugsweise mit einem Winkel von etwa 45°.

3. Befestigungselement (1) nach Anspruch 2, **dadurch gekennzeichnet, dass** die Nasen im gebogenen Einbauzustand vom zentralen Abschnitt in Richtung der Enden des Hauptschenkelabschnitts (2) gesehen keilförmig zulaufend sind.

4. Befestigungselement (1) nach Anspruch 2, **dadurch gekennzeichnet, dass** die Nasen (4a, 4b) im gebogenen Einbauzustand von den Enden in Richtung des zentralen Hauptabschnitts des Hauptschenkelabschnitts (2) gesehen keilförmig zulaufend sind.

5. Befestigungselement (1) nach einem der vorhergehenden Ansprüche, **dadurch gekennzeichnet, dass** der Hauptschenkelabschnitt (2) einen rechteckförmigen Querschnitt hat.

6. Befestigungselement (1) nach einem der vorgehenden Ansprüche, **dadurch gekennzeichnet, dass** das Befestigungselement (1) aus Polypropylen (PP) gebildet ist.

7. Befestigungselement (1) nach einem der vorhergehenden Ansprüche, **dadurch gekennzeichnet, dass** die Nasen (4a, 4b) spitzwinklig in den Hauptschenkelabschnitt (2) übergehen.

8. Verfahren zum Festlegen von Leitungen (6) in Mauernuten (7) mit einem Befestigungselement (1) nach einem der vorhergehenden Ansprüche, **gekennzeichnet durch**
a) Einlegen der Leitung (6) in die Leitungsaufnahmeschelle (5) **durch** eine Aufnahmeöffnung im Bereich der Enden (3a, 3b) des Hauptschenkelabschnitts (2), und
b) Eindrücken des Befestigungselementes (1) in die Mauernut (7) so, dass zunächst der Hauptschenkelabschnitt (2) und zuletzt die Nasen (4a, 4b) in die Mauernut (7) eingeführt und **durch** die Federwirkung des Hauptschenkelabschnitts (2) und der Nasen (4a, 4b) das Befestigungselement (1) in der Mauernut (7) verkeilt wird.
